(19) Europäisches Patentamt

European Patent Office

Office européen des brevets

(11) **EP 1 305 112 B1**

(12) **EUROPEAN PATENT SPECIFICATION**

(45) Date of publication and mention
of the grant of the patent:
**21.06.2006 Bulletin 2006/25**

(51) Int Cl.:
***B01J 32/00*** (2006.01)     ***B01J 35/10*** (2006.01)
***C10G 49/04*** (2006.01)

(21) Application number: **01962885.8**

(22) Date of filing: **30.07.2001**

(86) International application number:
**PCT/EP2001/008772**

(87) International publication number:
**WO 2002/009870 (07.02.2002 Gazette 2002/06)**

(54) **HYDROPROCESSING CATALYST FOR HEAVY OILS AND ITS USE**

WASSERSTOFFBEHANDLUNGSKATALYSATOREN FÜR SCHWERÖLE UND IHRE VERWENDUNG

CATALYSEUR D'HYDROCRAQUAGE POUR HUILES LOURDES ET UTILISATION DE CELUI-CI

(84) Designated Contracting States:
**BE GB IT NL**

(30) Priority: **28.07.2000 JP 2000228861**

(43) Date of publication of application:
**02.05.2003 Bulletin 2003/18**

(73) Proprietor: **Nippon Ketjen Co., Ltd
Minato-ku,
Tokyo 105-6791 (JP)**

(72) Inventors:
• **IKEDA, Hiroyuki
Niihama-shi,
Ehime 792-0002 (JP)**
• **MORITA, Shinji
Niihama-shi,
Ehime 792-0002 (JP)**
• **KATSUHISA, Fujita
Niihama-shi,
Ehime 792-0002 (JP)**

(74) Representative: **Derks, Wilbert et al
Howrey LLP
Rembrandt Tower
Amstelplein 1, 31st Floor
1096 HA Amsterdam (NL)**

(56) References cited:
**EP-A- 0 968 764**     **EP-A- 0 992 285**
**US-A- 4 048 060**

**Description**

The present invention pertains to a catalyst which shows high activity in one or more of hydrodesulfurisation (HDS), hydrodenitrogenation (HDN), hydrodemetallisation (HDM), and hydrocracking (HC) of hydrocarbon feeds, in particular heavy hydrocarbon feeds.

In recent years, the supplied crude oils have become heavier, and, as the demand for lighter oils like kerosene and light oils has been increasing, it has proved necessary to improve the efficiency of the process for converting heavy oils into lighter oils. Actually, heavy oils like crude oil, atmospheric distillate residuum, vacuum distillation residuum, and vacuum distillation gas oil have been extensively converted into lighter oils by fluid catalytic cracking (FCC). In order to extend the life of the FCC catalyst, it has become necessary to further decrease the levels of FCC catalyst poisons like sulfur, nitrogen, metals like nickel and vanadium, Conradson carbon (CCR), and the like. For these reasons, the heavy feedstocks are often subjected to a hydroprocessing step before the fluidised catalytic cracking operation to effect one or more of hydrodesulfurisation, hydrodenitrogenation, hydrodemetallisation, and hydrocracking of heavy hydrocarbon feeds. The hydroprocessing catalysts used in this process conventionally comprise a metal oxide carrier of, e.g., alumina loaded with a Group VIB metal component, like molybdenum and tungsten and a Group 8 metal component, like nickel and/or cobalt. It has been considered to improve the hydroprocessing activity by enhancing the acidity of the catalyst carrier, e.g., by the addition of another oxide, such as silica, thereto.

Japanese laid-open patent application 1995-196308 describes a catalyst based on a silica-alumina carrier which is prepared by depositing a silica hydrate on an alumina hydrate using a water-soluble silicon compound. The thus-obtained silica-coated alumina has a high degree of silicon dispersion. The hydroprocessing catalyst based on this carrier is described as having a higher hydrodesulfurisation activity than hydroprocessing catalysts based on a conventional alumina carrier. However, the average pore diameter of the catalyst of this reference is small, and the catalyst is not suitable for the hydroprocessing of heavy oils.

Japanese laid-open patent application 1997-255321 describes a silica-alumina which has a 29Si-NMR spectrum in which the main maximum of the peak observed in the -50 through -110 ppm range is positioned in the range of -80 to -90 ppm, with the width of the peak at half height being 19 ppm or less. However, this catalyst also has an average pore diameter which is too small for the catalyst to be suitable in the hydroprocessing of heavy oils.

EP 0992285 describes a silica-containing catalyst which has a 29Si-NMR spectrum wherein the area of the peak at -80ppm is at least 10% of the combined area of all peaks and wherein the combined area of the peaks at - 80ppm, -86ppm, and -92 ppm is at least 20% of the combined area of all Y peaks.

EP 0 355 213 describes a catalyst to be used in combustion with, e.g., gas turbines. The catalyst carrier is a silica-alumina which has a 29Si-NMR spectrum showing a peak area at -110 ppm to -130 ppm which is 0-10% of the peak area at -50 to -130 ppm.

US 5,334,307 describes a silica-containing catalyst for the hydrotreating of heavy oils. No information is given on the Si-NMR spectrum of the catalyst.

The problem underlying the present invention is the provision of a hydroprocessing catalyst having a high activity in one or more of hydrodesulfurisation, hydrodenitrogenation, hydrodemetallisation, and hydrocracking of hydrocarbon feeds, in particular heavy hydrocarbon feeds.

The inventors studied eagerty to solve the above problem. and have found that a catalyst with a high activity for removing at least one of sulfur, nitrogen, and metals (Ni + V) from a, in particular heavy, hydrocarbon oil and converting it into lighter oils of higher value could be obtained by loading a specific silica-alumina catalyst carrier with a specific hydrogenation component In particular, the catalyst of the present invention is suitable to effect combined hydrodesulfurisation, hydrodenitrogenation, and hydrocracking of heavy hydrocarbon feeds, while also effecting hydrodemetallisation when the feedstock contains substantial amounts of metal components. The hydroprocessing catalyst of the present invention is characterised by an average pore diameter of 10 to 30 nm, a specific surface area of 130 to 300 $m^2$/g, and a pore volume of at least 0.3 ml/g, and at least 50% of the pore volume of pores with a diameter below 60 nm is present in pores within a range of the average pore diameter $\pm 5$ nm, the hydroprocessing catalyst being based on a silica-alumina carrier which has a 29Si-NMR spectrum wherein the main maximum of the peak observed in the range of -50 ppm to -110 ppm is between -80 ppm and -100 ppm, and comprising at least one hydrogenation metal component selected from Group VIB and Group VIII of the Periodic Table of Elements.

The silica-alumina carrier used in the catalyst of the present invention has a 29Si-NMR spectrum wherein the main maximum of the peak observed in the range of -50 ppm to -110 ppm is between -80 ppm and -100 ppm. If the main maximum of said peak is outside the specified range, a hydroprocessing catalyst with the desired activity cannot be obtained. The reason behind this is not clear. However, according to Japanese patent publication 2515379 and JP laid-open patent application 1997-255321 a silicon atom provided with four -O-Al bonds has its adsorption peak at -80 ppm. On the other hand, silicon atoms provided with at least two -O-Si bonds have their adsorption peaks above -100 ppm. It is therefore presumed that the fact that the main maximum of the peak observed in the range of -50 ppm to -110 ppm is between -80 ppm and -100 ppm is an indication of a specific dispersion of the silicon in the catalyst resulting in specific catalyst surface properties which apparently make the catalyst highly suitable for the hydroprocessing of heavy oils. The 29Si-NMR is carried out using a CMX-300 (5mm probe) produced by Chemagnetics and the measuring conditions were as follows:

| Observation frequency | 59.646 MHz |
|---|---|
| Observation range | 27.027 kHz |
| Data points | 8192 |
| Observation points | 2048 |
| Measuring method | 1 dpa (29Si-MAS by 1 H gated decouple) |
| Pulse width | 1.7 microsec (29Si 30° pulse) |
| Repetition of integration | pd=15sec, ad=20 microsec, rd=25 microsec |
| Sample rotation frequency | 4kHz |
| Integration times | 5432-12000 times |
| window processing | 100 Hz (exponential function window) |
| Measuring temperature | room temperature |
| chemical shift reference | silicone rubber (secondary external reference of TMS: -21.9 ppm) |

Silica-aluminas suitable for use in the catalyst of the present invention can be obtained by combining an organic silicon compound with an alumina source. Suitable organic silicon compounds include alkylsilanes such as tetramethylsilane and tetraethylsilane, alkoxysilanes such as tetramethoxysilane, tetraethoxysilane, methyltrimethoxysilane, and phenyltriethoxysilane, polymers thereof, straight silicone oils such as dimethylsilicone oil, methylphenylsilicone oil, and methylhydrogensilicone oil, organic modified silicone oils such as alkyl modified silicone oils, fluorine modified silicone oils, polyether modified silicone oils, alcohol modified silicone oils, amino modified silicone oils, epoxy modified silicone oils, phenol modified silicone oils, carboxy modified silicone oils, and mercapto modified silicone oils, and mixtures and combinations thereof. The combining of the organic silicon source with the alumina source may be carried out, e.g., by kneading, immersion, impregnation, etc. For the incorporation, the silicon compound can also be dispersed in a solvent if need be. The amount of silicon compound should be selected in such a manner that the final carrier contains the desired amount of silica. The silica content of the carrier is generally 1 to 20 wt.%, preferably 3 to 10 wt%. If less than 1 wt.% of silica is present in the carrier, the effect of the invention is not obtained. If the carrier contains more than 20 wt.% of silica, there is little further improvement of the effect. The alumina may be of any suitable type, including alpha alumina, theta alumina, delta alumina, kappa alumina, eta alumina, gamma alumina, or chi alumina, and alumina hydrates such as bayerite, gibbsite, or boehmite, and mixtures of the above. It is preferred for at least 80% of the alumina in the final catalyst to be made up of gamma alumina and/or eta and theta alumina.

A suitable process for preparing a silica-alumina for the catalyst according to the invention is, e.g, as follows.

In a first step a basic compound such as ammonium hydroxide, sodium hydroxide, or sodium aluminate is combined in an aqueous medium with an acidic aluminium compound such as aluminium nitrate or aluminium sulfate, and the mixture is mixed to prepare an aluminium hydrate slurry. The pH of the mixed solution changes with the progression of the reaction, but it is preferred that when all compounds have been combined the pH is between 7 and 9. The final reaction temperature preferably is between 60 and 75°C. It may be desirable to age the resulting product before further processing, e.g., for a period of 0.5 to 4 hours. When the reaction is completed, the resulting alumina gel is isolated by filtration. It may then be washed to remove impurities. Then, the organic silicon compound is combined with the gel. The silicon compound can be added as such, or in a suitable solvent The mixture is mixed, e.g., by kneading for a period of 10 minutes to 2 hours. If necessary, the water content of the mixture is adjusted to a value suitable for shaping, which for extrusion generally.. is between 60 and 70 wt.%. Then, the mixture is shaped, e.g., by extrusion. As is known in the art, extrusion aids may be added during the extrusion to control the viscosity and/or the pore structure of the carrier after calcination, if so desired. Suitable compounds include polyalcohols, cellulose, or acids like nitric acid, acetic acid, or formic acid.

The shaped particles are dried and calcined to obtain a suitable carrier. It is preferred for the drying to be carried out at a temperature between room temperature and 200°C, and that the calcination is carried out in air at a temperature of 300 to 900°C.

For the catalyst according to the invention to achieve the desired object in the hydroprocessing of heavy oils, it must have a specified surface area and pore size distribution:

The catalyst according to the invention has a surface area as determined by the BET method by nitrogen adsorption (after calcination for three hours at 500°C) in the range of 130 to 300 $m^2/g$, preferably between 150 and 240 $m^2/g$. A surface area below 130 $m^2/g$ will lead to insufficient activity. On the other hand, a surface area above 300 $m^2/g$ is incompatible with the required pore size distribution.

The total pore volume of the catalyst according to the invention as determined by nitrogen adsorption should be at least 0.3 ml/g, preferably in the range of 0.4 to 1.0 ml/g. If the total pore volume is below 0.3 ml/g, the catalyst performance is insufficient

The average pore diameter of the catalyst according to the invention as determined by nitrogen adsorption should be in the range of 10 to 30 nm, preferably 10 to 20 nm, more preferably 12 to 20 nm. In this specification, the average pore diameter is defined as the pore diameter at which 50% of the total pore volume is present in pores with a diameter below said pore diameter, and the other 50% of the total pore volume is present in pores with a diameter above that pore diameter. If the average pore diameter is less than 10 nm, the hydrogenation metals are poorly dispersed, which results in a decrease in catalytic activity. If the average pore diameter is above 30 nm, the effective specific surface area of the catalyst decreases, which results in a decrease in catalytic activity.

The catalyst according to the invention, should have at least 50% of the pore volume of pores with a diameter below 60 nm present in pores within a range of the average pore diameter $\pm 5$ nm. The pores present in the range of $\pm 5$ nm of the average pore diameter are considered to be the effective pores for the hydrodesulfurisation and hydrodemetallisation reactions to be effected by the catalyst according to the invention. If this value is below 50%, the pore size distribution is too wide and an effective catalyst is not obtained. Preferably, the percentage of the pore volume of pores present in the specified range is at least 55%, more preferably at least 60%.

It is preferred for the catalyst according to the invention to have at least 50% of the pore volume of pores with a diameter below 60 nm present in pores with a diameter between 10 and 30 nm. More preferably, the %PV[(10-30 nm)/(<60 nm)] is at least 55%, still more preferably at least 60%, and even more preferably at least 65%:

The pore volume and pore size distribution are obtained using the BJH method from the nitrogen adsorption isotherm at 77K using the BELSORP 28 produced by Nippon Bell K.K after the catalyst is calcined for three hours at 500°C.

The catalyst of the present invention comprises at least one element selected from Group VIB and Group VIII of the Periodic Table of Elements applied by Chemical Abstract Services (CAS system). The use of a combination of a Group VI metal component and a Group VIII metal component is preferred.

As Group VIII metals which can be used in the present invention nickel, cobalt, iron, etc. may be mentioned. These compounds all have a high hydrogenation activity. However, in view of performance and economy, nickel or a combination of nickel and cobalt is preferred. As Group VIB metals which can be used molybdenum, tungsten, and chromium may be mentioned, but in view of performance and economy, molybdenum is preferred.

Based on the weight (100 wt.%) of the final catalyst including the carrier, the amounts of the respective catalytic materials are as follows. The catalyst comprises 4 to 20 wt%, preferably 8 to 16 wt.%, of Group VIB metal, calculated as trioxide. If less than 4 wt% is used, the activity of the catalyst is insufficient On the other hand, if more than 16 wt.%, in particular more than 20 wt.% is used, the catalytic performance is not improved further.

The catalyst comprises 0.5 to 6 wt.%, preferably 1 to 5 wt.%, of Group VIII metal, calculated as oxide. If the amount is less than 0.5 wt.%, the activity of the catalyst will be too low. If more than 6 wt.% is present, the catalyst performance will not be improved further.

It is preferred for the carrier of the catalyst according to the invention to comprise at least 80 wt.% of the total of silica and alumina, more preferably at least 90 wt.%, still more preferably, at least 98 wt.%. It is most preferred for the carrier of the catalyst according to the invention to consist essentially of silica and alumina; the indication "consists essentially of means that other materials may be present in minor amounts, as long as they do not materially decrease the catalytic activity of the catalyst composition according to the invention. Nevertheless, the catalyst according to the invention may contain additional compounds if so desired. For example, the catalyst support material may contain up to 10 wt.% of other compounds, such as titania, zirconia, boria, magnesia, zinc oxide, zeolite, clay minerals, or a combination thereof. Preferably, the support material contains less than 5 wt.% of these additional components, more preferably less than 2 wt.%. If desired, it is possible to incorporate additional catalytic components into the catalyst composition. For example, phosphoric acid may be used to help dissolve the hydrogenation metal components. In that case, phosphorus is generally present in the final catalyst in an amount of 0.5 to 6 wt.%., preferably to 4 wt.%, calculated as $P_2O_5$.

The Group VIB metal components and Group VIII metal components can be incorporated into the catalyst carrier in a conventional manner, e.g., by impregnation, immersion, or deposition. At this point in time it is considered preferred to first prepare the carrier and to incorporate the catalytic materials into the carrier after it has been dried and calcined. The metal components can be incorporated into the catalyst composition in the form of suitable precursors. For the Group VIB metals, ammonium heptamolybdate, ammonium dimolybdate, and ammonium tungstate may be mentioned as suitable precursors. Other compounds, such as oxides, hydroxides, carbonates, nitrates, chlorides, and organic acid salts, may also be used. For the Group VIII metals, suitable precursors include oxides, hydroxides, carbonates, nitrates, chlorides, and organic acid salts. Carbonates and nitrates are particularly suitable. The impregnation solution; if applied, may contain other compounds the use of which is known in the art, such as mineral acids like nitric acid, hydrochloric acid, and phosphoric acid, organic acids like formic acid, acetic acid, oxalic acid, citric acid, malic acid, and gluconic acid. Salts thereof and various chelates like ethylene diamine and EDTA can also be added. It will be clear to the skilled person that there is a wide range of variations on this method. Thus, it is possible to apply a plurality of impregnating steps, the impregnating solutions to be used containing one or more of the component precursors that are to be deposited, or a portion thereof. Instead of impregnating techniques, dipping methods, spraying methods, etc. can be used. In the case of multiple impregnation, dipping, etc., drying and/or calcining may be carried out in between.

After the active metals have been incorporated into the catalyst composition, it is dried and calcined at need. The drying can be done at such a temperature and for such a period of time as to ensure that the solvent, conventionally water, does not remain in the pores of the silica-alumina carrier in the liquid form. The atmosphere is not especially limited; usually air is used. Drying may, e.g., be carried out in air flow for 0.5 to 16 hours at a temperature between room temperature and 200°C. After drying, the catalyst may be charged into the reactor as it is and be converted into the active state during use. However, if so desired, the catalyst may also be calcined before use. The calcining is done to bring at least part, preferably all, of the metal component precursors into the oxide form. Calcination is usually done at a temperature higher than the reaction temperature at which the catalyst will actually be used. Calcination may, e.g., be carried out in air for 1 to 6 hours, preferably 1 to 3 hours, at 200 to 800°C, preferably 450 to 600°C.

The catalyst particles may have the shapes and dimensions common to the art. Thus, the particles may be spherical, cylindrical, or polylobal and their diameter may range from 0.5 to 10 mm. Particles with a diameter of 0.5 to 5 mm, preferably 0.7 to 3 mm, and a length of 2 to 10 mm, for example 2.5 to 4.5 mm, are preferred.

It may be desirable to convert the catalyst, i.e. the Group VIB and Group VIII metal components present therein, into the sulfidic form prior to its use in the hydroprocessing of hydrocarbon feedstocks. This may be done in an otherwise conventional manner, e.g., by contacting the catalyst in the reactor at increasing temperature with hydrogen and a sulfur-containing feedstock, or with a mixture of hydrogen and hydrogen sulfide.

The catalyst of the present invention is suitable for the hydroprocessing of hydrocarbon feedstocks to effect one or more of hydrogenation, hydrodesulfurisation, hydrodenitrogenation, hydrodemetallisation, and hydrocraclcing. The catalyst of the present invention is particularly suitable for the hydroprocessing of heavy hydrocarbon feedstocks to effect simultaneous hydrodesulphurisation, hydrodenitrogenation, hydrocracking, and, if applicable, hydrodemeta-Hisation.

Suitable feedstocks generally contain at most 5 wt.% of sulfur, preferably 0.1 to 2 wt.%, more preferably 0.5 to 2 wt.%. The nitrogen content of suitable feedstocks is generally above 500 ppm and will frequently be in the range of 500 to 4000 ppm, preferably 500 to 3500 ppm. The feedstock may contain contaminant metals, in particular nickel and vanadium, generally in an amount of 150 wppm Ni+V or less, preferably in an amount of 5 to 50 wppm.

The initial boiling point (IBP) (ASMT-D' 5307) will generally be at most 550°C, preferably at most 400°C. The IBP may be above 250°C, or even above 300°C. Generally, at most 98 wt.% of the feedstock boils above 390°C (ASTM-D 5307), preferably at most 95 wt.%. Of suitable heavy feeds, generally at least 35 wt.% boils above 390°C, preferably at least 45 wt.%, more preferably at least 55 wt.%.

Suitable feedstocks include feedstocks comprising crude oils, vacuum gas oils, atmospheric distillate residues, vacuum distillate residues, coker gas oils, solvent deasphalted oils, tar sand oils, shale oils, and coal liquids, and mixtures thereof. Hydrocarbon -oils obtained by subjecting these feedstocks to a prehydroprocessing operation may also be used.

The process conditions for the process according to the invention may be as follows. The temperature generally is 300 to 450°C, preferably 340 to 410°C. The hydrogen partial pressure generally is 2 to 22 MPA, preferably 10 to 20 MPA. The liquid hourly space velocity generally is 0.1 to 10 h-1, preferably 0.2 to 2 h-1. The hydrogen to feedstock ratio generally is 300 to 1500 Nl/l, preferably 600 to 1000 Nl/l.

The process may be carried out in a fixed bed or a moving bed, including ebullating bed or fluidised bed operation. Fixed bed operation may be preferred.


Example 1


880 grams, calculated as alumina, of aluminium sulfate were added to 70 liters of water, and the solution, which had a pH of 3, was kept at 30°C with stirring. In 30 minutes 1 N ammonia water was added until the pH reached a value of 8, to obtain an alumina hydrate slurry. The slurry was heated to 60°C in 30 minutes and aged at that temperature for three hours. Then, the precipitate was filtered off. The obtained filter cake was dispersed in 75 liters of a 6% aqueous ammonium carbonate solution, and the dispersion was kept for 30 minutes at 60°C with stirring. The slurry was filtered, and the filter cake was washed with water and introduced into a kneader. 99 grams of commercially available dimethyl silicone oil (KF96 by Shin-Etsu Chemical Co. Ltd.) were added, and the mixture was kneaded for 30 minutes at room temperature until an extrudable mixture (water content of 63%) was obtained. The mixture was extruded to form cylinders with a diameter of 1.0 mm. The extruded material was dried at a temperature of 120°C for 15 hours and subsequently calcined for 1 hour at 500°C. The extrudates were impregnated with an aqueous impregnation solution comprising molybdenum trioxide, nickel carbonate, and orthophosphoric acid, after which the impregnated extrudates were dried at 80°C for 18 hours in air followed by calcination at 450°C for three hours to obtain a hydroprocessing catalyst. The composition and properties of the catalyst are given in Table 1.

Comparative Example 1

A carrier was prepared as described in Example 1, up to and including the dispersion and aging in the ammonium carbonate solution. Then, the slurry was filtered and the resulting filter cake was dispersed in 75 liters of 30°C water and a waterglass solution (6wt.% silica) was added in two minutes. Then the slurry was heated to 60°C in 30 minutes and kept at that temperature for 3 hours, to obtain a dispersion of silica-coated alumina hydrate particles. The dispersion was filtered, the filter cake was washed with water and heated and kneaded in a kneader until an extrudable mix (water content 63%) was obtained. The mixture was then extruded to form cylinders with a diameter of 1.0 mm. The extrudates were further treated and a catalyst was prepared therefrom as described in Example 1 above. The composition and properties of the catalyst are given in Table 1.

Comparative Example 2

Example 1 was repeated, except that the water content of the silica-alumina hydrate before extrusion was 66%. The composition and properties of the catalyst are given in Table 1.

Comparative Example 3

Example 1 was repeated, except that instead of silicone oil 20 grams of a silica sol (colloidal silica, silicic anhydride 30%) were used. The composition and properties of the catalyst are given in Table 1.

Comparative Example 4

Example 1 was repeated, except that no silicone oil was added. The composition and properties of the catalyst are given in Table 1.

Example 5

The catalysts of Example 1 and Comparative Examples 1 through 4 were tested in hydroprocessing of a heavy hydrocarbon feedstock. The feedstock used in these examples was a Middle East atmospheric distillation residuum having the following properties:

| | |
|---|---|
| Sulfur (wt.%) | 4.7 |
| Nitrogen (wppm) | 2333 |
| Vanadium + nickel (wppm) | 38 |
| Asphaltene (wt.%) | 3.9 |
| Fraction boiling above 390°C (wt.%) (ASTM D 5307) | 91 |
| Density (g/ml, 15°C) | 0.9546 |

50 ml of the catalyst to be tested was packed into a fixed bed reactor. The feedstock was introduced into the unit at a liquid hourly space velocity of 0.7 h-1, a hydrogen partial pressure of 13 MPa, a reaction temperature of 395°C in the fixed bed, with the ratio of supplied hydrogen to feedstock ($H_2$/oil) being kept at 800 Nl/l. The process was carried out in the liquid phase.

The oil product produced by this process was collected and analysed to calculate the amounts of sulfur (S), nitrogen (N), and metals (M) removed by the process, as well as the 390°C+fraction. The relative volume activity values were obtained from the following formulae.

$$RVA = 100 * k \text{ (tested catalyst)} / k \text{ (Comparative Catalyst 4)}$$

wherein for HDS

$$k = (LHSV/(0.7)) * (1/y^{0.7} - 1/x^{0.7})$$

and for HDN, HDM, and 390°C+ conversion

$$k = LHSV * \ln(x/y)$$

with x being the content of S, N, M, or 390°C+ fraction in the feedstock, and y being the content of S, N, M, or 390°C+ fraction in the product.

The results are given in Table 1 below;

| | Example 1 | Comp. Example 1 | Comp. Example 2 | Comp. Example 3 | Comp. Example 4 |
|---|---|---|---|---|---|
| | | | | | |
| Caiatyst composition | | | | | |
| MoO3 (wt.%) | 12.0 | 12.0 | 12.0 | 12.0 | 12.0 |
| NiO (wt%), | 3.0 | 3.0 | 3.0 | 3.0 | 3.0 |
| P205 (wt.%) | 3.6 | 3.6 | 3.6 | 3.6 | 3.6 |
| silica(wt.%) | 5.0 | 5.0 | 5.0 | 5.0 | 0 |
| alumina | balance | balance | balance | balance | balance |
| surface area (m2/g) | 200 | 250 | 190 | 255 | 210 |
| APD (nm) | 13.0 | 8.0 | 14.5 | 12.0 | 12.0 |
| 29Si maximum peak (ppm) | -83 | -80 | -86 | -107 | - |
| %PV[5(APD±5 nm)(PV<60 nm)] | 63 | 66 | 48 | 67 | 68 |
| PV (ml/g) | 0.48 | 0.46 | 0.55 | 0.50 | 0.65 |
| | | | | | |
| Test results | | | | | |
| RVA HDS | 115 | 110 | 100 | 100 | 100 |
| RVA NDN | 150 | 110 | 130 | 98 | 100 |
| RVA HDM | 109 | 105 | 115 | 100 | 100 |
| RVA 390°C+ | 120 | 107 | 95 | 97 | 100 |

From the results in Table 1 it can be seen that the catalyst of Example 1 shows better results in the removal of sulfur, nitrogen, and metals, and in the conversion of the 390°C+ fraction, than the catalysts of Comparative Examples 1 through 4.

**Claims**

1.   A hydroprocessing catalyst suitable, in particular, for the hydroprocessing of heavy hydrocarbon feedstocks which comprises at least one metal component of Group VIB and/or Group VIII on a carrier comprising silica-alumina, the silica-alumina carrier having a $^{29}$Si-NMR spectrum wherein the main maximum of the peak observed in the range of -50 ppm to -110 ppm is between -80 ppm and -100 ppm, and wherein the catalyst has an average pore diameter (APD) of 10 to 30 nm, a total pore volume of at least 0.3 ml/g, a surface area of 130 to 300 m$^2$/g, with at least 50% of the pore volume of pores with a diameter below 60 nm being present in pores within a range of the average pore diameter $\pm$ 5 nm.

2. The catalyst of claim 1 wherein the carrier has a silica content of 1 to 20 wt.%, preferably 3 to 10 wt.%.

3. The catalyst of claim 1 or 2 which comprises 4 to 20 wt.% of a Group VIB metal component, calculated as trioxide, preferably molybdenum, and 0.5 to 6wt.% of Group VIII metal component, calculated as oxide, preferably nickel or nickel and cobalt.

4. The catalyst of any one of the preceding claims wherein at least 55% of the pore volume of pores with a diameter below 60 nm is present in pores within a range of the average pore diameter $\pm$ 5 nm, preferably at least 60%.

5. A process for preparing the catalyst of any one of the preceding claims wherein the silica is incorporated into the catalyst composition via an organic silicon compound.

6. The process of claim 5 wherein the silicon compound is selected from the group of alkylsilanes, alkoxysilanes, and straight or modified silicon oils.

7. A process for the hydroprocessing of hydrocarbon feedstocks wherein a hydrocarbon feedstock is contacted with hydrogen at a temperature of 300 to 450°C and a hydrogen partial pressure of 2 to 22 Mpa in the presence of a catalyst according to any of claims 1-4.

8. The process of claim 7 wherein the hydrocarbon feedstock has an IBP of at least 250°C and/or wherein at least 35 wt.% of the feedstock boils above 390°C.

9. The process of claim 7 or 8 wherein the hydrocarbon feedstock has a sulfur content of 0.1 to 2 wt.% and/or a metals content, calculated as Ni+V, of 5 to 50 wppm.

**Patentansprüche**

1. Hydroprocessing-Katalysator, der insbesondere zum Hydroprocessing von schweren Kohlenwasserstoff-Einsatzmaterialien geeignet ist, der wenigstens eine Metallkomponente der Gruppe VIB und/oder der Gruppe VIII auf einem Siliciumdioxid/Aluminiumoxid umfassenden Träger umfasst, wobei der Siliciumdioxid-Aluminiumoxid-Träger ein $^{29}$Si-NMR-Spektrum hat, in dem das Hauptmaximum des im Bereich von -50 ppm bis -110 ppm beobachteten Peaks zwischen -80 ppm und -100 ppm liegt und wobei der Katalysator einen mittleren Porendurchmesser (APD) von 10 bis 30 nm, ein Gesamt-Porenvolumen von wenigstens 0,3 ml/g, eine spezifische Oberfläche von 130 bis 300 m$^2$/g hat, wobei wenigstens 50 % des Porenvolumens von Poren mit einem Durchmesser von weniger als 60 nm in Poren innerhalb eines Bereichs des mittleren Porendurchmessers von $\pm$5 nm vorhanden sind.

2. Katalysator nach Anspruch 1, wobei der Träger einen Siliciumdioxid-Gehalt von 1 bis 20 Gew.-%, vorzugsweise 3 bis 10 Gew.-% hat.

3. Katalysator nach Anspruch 1 oder 2, umfassend 4 bis 20 Gew.-% einer Komponente eines Metalls der Gruppe VIB, berechnet als Trioxid, vorzugsweise Molybdän, und 0,5 bis 6 Gew.-% einer Komponente eines Metalls der Gruppe VIII, berechnet als Oxid, vorzugsweise Nickel oder Nickel und Kobalt.

4. Katalysator nach einem der vorherigen Ansprüche, wobei wenigstens 55 %, vorzugsweise wenigstens 60 % des Porenvolumens von Poren mit einem Durchmesser von weniger als 60 nm in Poren innerhalb eines Bereichs des mittleren Porendurchmessers von $\pm$5 nm vorhanden sind.

5. Verfahren zur Herstellung des Katalysators nach einem der vorherigen Ansprüche, wobei das Siliciumdioxid mittels einer organischen Siliciumverbindung in die Katalysator-Zusammensetzung eingearbeitet wird.

6. Verfahren nach Anspruch 5, wobei die Siliciumverbindung aus der Gruppe von Alkylsilanen, Alkoxysilanen und einfachen oder modifizierten Siliciumölen ausgewählt ist.

7. Verfahren zum Hydroprocessing von Kohlenwasserstoff-Einsatzmaterialien, wobei ein Kohlenwasserstoff-Einsatzmaterial bei einer Temperatur von 300 bis 450 °C und einem Wasserstoff-Partialdruck von 2 bis 22 MPa in Gegenwart eines Katalysators nach einem der Ansprüche 1 - 4 mit Wasserstoff in Kontakt gebracht wird.

8. Verfahren nach Anspruch 7, wobei das Kohlenwasserstoff-Einsatzmaterial einen IBP (Anfangs-Siedepunkt) von wenigstens 250 °C hat und/oder wobei wenigstens 35 Gew.-% des Einsatzmaterials oberhalb von 390 °C sieden.

9. Verfahren nach Anspruch 7 oder 8, wobei das Kohlenwasserstoff-Einsatzmaterial einen Schwefelgehalt von 0,1 bis 2 Gew.-% und/oder einen Metallgehalt, berechnet als Ni+V, von 5 bis 50 Gew.-ppm hat.

**Revendications**

1. Catalyseur d'hydrotraitement adapté, en particulier, à l'hydrotraitement de charges d'hydrocarbure lourd qui comprend au moins un composant métallique du groupe VIB et/ou du groupe VIII sur un support comprenant de la silice-alumine, le support de silice-alumine ayant un spectre $^{29}$Si-RMN dans lequel le maximum principal du pic observé dans la plage de -50 ppm à -110 ppm est compris entre -80 ppm et -100 ppm, et dans lequel le catalyseur a un diamètre de pore moyen (APD) de 10 à 30 nm, un volume poreux total d'au moins 0,3 ml/g, une surface catalytique active de 130 à 300 m$^2$/g, au moins 50 % du volume poreux constitués par des pores ayant un diamètre inférieur à 60 nm étant présents dans les pores dont la plage de diamètre de pore moyen est de $\pm$ 5 nm.

2. Catalyseur selon la revendication 1, dans lequel le support a une teneur en silice de 1 à 20 % en poids, de préférence de 3 à 10 % en poids.

3. Catalyseur selon la revendication 1 ou 2 qui comprend 4 à 20 % en poids d'un composant métallique de groupe VIB, calculé sous forme de trioxyde, de préférence du molybdène, et 0,5 à 6 % en poids de composant métallique de groupe VIII, calculé sous forme d'oxyde, de préférence du nickel ou du nickel et cobalt.

4. Catalyseur selon l'une quelconque des revendications précédentes, dans lequel au moins 55 % du volume poreux constitués par des pores ayant un diamètre inférieur à 60 nm est présent dans les pores dont la plage de diamètre de pore moyen est de $\pm$ 5 nm, de préférence au moins 60 %.

5. Procédé de préparation du catalyseur selon l'une quelconque des revendications précédentes, dans lequel la silice est incorporée dans la composition de catalyseur via un composé de silicium organique.

6. Procédé selon la revendication 5, dans lequel le composé de silicium est choisi dans le groupe des alkylsilanes, alkoxysilanes et des huiles de silicone linéaires ou modifiées.

7. Procédé d'hydrotraitement de charges d'hydrocarbure, dans lequel une charge d'hydrocarbure est mise en contact avec de l'hydrogène à une température de 300 à 450°C et une pression partielle d'hydrogène de 2 à 22 Mpa en la présence d'un catalyseur selon l'une quelconque des revendications 1 à 4.

8. Procédé selon la revendication 7, dans lequel la charge d'hydrocarbure a un IBP (point initial de distillation) d'au moins 250°C et/ou dans lequel au moins 35 % en poids de la charge boue au-dessus de 390°C.

9. Procédé selon la revendication 7 ou 8, dans lequel la charge d'hydrocarbure a une teneur en soufre de 0,1 à 2 % en poids et/ou une teneur en métaux, calculée sous forme de Ni + V, de 5 à 50 ppm en poids.